# EUROPEAN PATENT APPLICATION

(11) **EP 4 700 921 A1**
(43) Date of publication of application: **25.02.2026**
(21) Application number: 24880063.3
(22) Date of filing: 14.10.2024
(51) Int. Cl.: H01M 50/102, H01M 50/105, H01M 10/04

(54) **BATTERY CASE, HALF-ASSEMBLY FOR SECONDARY BATTERY COMPRISING SAME, AND METHOD FOR MANUFACTURING SECONDARY BATTERY**

(30) Priority: 17.10.2023 KR 20230138570; 11.10.2024 KR 20240138644
(71) Applicant: LG Energy Solution, Ltd., Seoul 07335 (KR)
(72) Inventor: WON, Sang Yeon, Daejeon 34122 (KR); KIM, Ji Hyun, Daejeon 34122 (KR)
(74) Representative: Plasseraud IP
(86) International application number: PCT/KR2024/015529
(87) International publication number: WO 2025/084726

(57) **Abstract**

The present disclosure relates to a battery case, a semi-assembly for a secondary battery including the same, and a secondary battery manufacturing method, and a battery case according to one aspect of the present disclosure is a battery case for accommodating an electrode assembly and an electrolyte, and may include a receiving portion having a receiving space for accommodating the electrode assembly; and a pocket portion connected to one side of the receiving portion, wherein the pocket portion may include a main pocket portion having a main pocket space for accommodating the electrolyte; and a connecting portion providing a connecting space that allows the main pocket space and the receiving space to communicate with each other, wherein the connecting space may have a larger cross-sectional area than the main pocket space.

## Description

### TECHNICAL FIELD

### CROSS-REFERENCE TO RELATED APPLICATIONS

The present application claims priority to Korean Patent Application No. 10-2023-0138570 filed on October 17, 2023 and Korean Patent Application No. 10-2024-0138644 filed on October 11, 2024 in the Republic of Korea, the disclosures of which are incorporated herein by reference.

### TECHNICAL FIELD

The present disclosure relates to a battery case, a semi-assembly for a secondary battery including the same, and a secondary battery manufacturing method.

### BACKGROUND ART

Recently, the depletion of fossil fuels forces to increase the price of energy sources and has strong impact on the growing attention towards environmental pollution, and the need for eco-friendly alternative energy sources is an essential factor for future life. In this context, a variety of energy generation technologies including solar energy, wind energy, tidal energy and the like are being studied, and attention is directed to energy storage systems such as batteries to make use of the produced electrical energy more efficiently.

Moreover, as the technology development and demand for electronic mobile devices and electric vehicles using batteries increase, the demand for batteries as an energy source is rapidly increasing, and accordingly, many studies are being conducted on batteries that meet a variety of needs.

Batteries are gaining attention as an energy source in a wide range of products including mobile devices and electric vehicles. In particular, secondary batteries are regarded as a promising energy resource that can replace the existing products using fossil fuels, and do not produce by-products from the use of energy, so they are attracting attention as an eco-friendly energy source.

Meanwhile, secondary batteries are also attracting attention as an energy source for electric vehicles (EVs), hybrid electric vehicles (HEVs), and plug-in hybrid electric vehicles (Plug-In HEVs) that are hailed as a solution for reducing air pollution from the existing vehicles using fossil fuels such as gasoline vehicles and diesel vehicles. That is, secondary batteries are used in the form of a battery pack including a plurality of battery modules.

In a secondary battery, an electrolyte acts as a medium that moves ions of the electrode. During the process of manufacturing the secondary battery, the electrolyte is injected and the electrode is impregnated with the electrolyte. As long as the electrolyte evenly permeates into the electrode, there is no problem in the performance and safety of the secondary battery, and thus in the prior art, during the electrolyte injection process, the electrolyte is injected enough to cover the entire electrode and the pressure is adjusted so that the electrolyte permeates into the electrode. In this case, since the electrolyte permeates from the outer edge of the electrode to the central part of the electrode, there is a problem that gas is trapped in the central part of the electrode.

To solve this problem, the battery manufacturing device disclosed in Japanese Patent Application Publication No. 2014-207244 has an under-pocket portion 24 capable of accommodating extra electrolyte on one side of the exterior material 2 that accommodates the battery element 1. However, since the part connecting the exterior material 2 and the under-pocket portion 24 in this battery manufacturing device is very narrow, it is likely to cause a bottleneck phenomenon in the flow of the electrolyte. As a result, not only is it difficult for extra electrolyte to enter the under-pocket portion 24, but there is also a problem that it is difficult for the electrolyte accommodated in the under-pocket portion 24 to escape into the receiving space of the exterior material 2 during the impregnation process.

### SUMMARY

### TECHNICAL PROBLEM

The present disclosure is designed to solve the problems of the related art, and therefore the present disclosure is directed to providing a battery case in which the impregnation process of an electrode assembly may be performed with high quality, a semi-assembly for a secondary battery including the same, and a secondary battery manufacturing method.

The technical problems of the present disclosure are not limited to the above-described problems, and other problems not mentioned herein may be clearly understood by those having ordinary skill in the art from the following description of the present disclosure.

### TECHNICAL SOLUTION

According to one aspect of the present disclosure, there is provided a battery case for accommodating an electrode assembly and an electrolyte, including a receiving portion having a receiving space for accommodating the electrode assembly; and a pocket portion connected to one side of the receiving portion, wherein the pocket portion includes a main pocket portion having a main pocket space for accommodating the electrolyte; and a connecting portion providing a connecting space that allows the main pocket space and the receiving space to communicate with each other, wherein the connecting space has a larger cross-sectional area than the main pocket space.

At this time, a cross-sectional area of the connecting space may increase from the main pocket space toward the receiving space.

At this time, the connecting portion may have a stepped shape or a rounded shape.

At this time, the receiving space may have a predetermined width in one direction, and the width of the receiving space may be larger than the width of the main pocket space.

At this time, the receiving space may have a predetermined width in one direction and a predetermined thickness in a direction perpendicular to the one direction, and the thickness of the receiving space may be larger than the thickness of the main pocket space.

At this time, an opening that is open outward may be provided on the other side of the receiving portion.

At this time, an electrode lead extending outward through the opening may be connected to the electrode assembly.

At this time, the pocket portion may be opposite to the opening.

At this time, the receiving portion may be provided with a bottom surface opposite to the opening, and the pocket portion may be located between the bottom surface and the opening.

At this time, the receiving space and the main pocket space may be disposed at a predetermined distance in one direction, and the cross-sectional area may be an area of a cross-section perpendicular to the one direction.

According to another aspect of the present disclosure, there is provided a semi-assembly for a secondary battery for manufacturing a secondary battery, including an electrode assembly; and a battery case including a receiving portion having a receiving space for accommodating the electrode assembly and a pocket portion connected to one side of the receiving portion, wherein the pocket portion includes a main pocket portion having a main pocket space for accommodating an electrolyte; and a connecting portion providing a connecting space that allows the main pocket space and the receiving space to communicate with each other, wherein the connecting space has a larger cross-sectional area than the main pocket space.

At this time, the electrode assembly may be supported by the connecting portion.

At this time, the electrode assembly may have a predetermined width in one direction, and the width of the main pocket space may be smaller than the width of the electrode assembly.

At this time, the electrode assembly may have a predetermined width in one direction and a predetermined thickness in a direction perpendicular to the one direction, and the thickness of the main pocket space may be smaller than the thickness of the electrode assembly.

According to still another aspect of the present disclosure, there is provided a secondary battery manufacturing method, including a step of disposing an electrode assembly in the receiving space of a battery case including a receiving portion having a receiving space and a pocket portion connected to one side of the receiving portion; a step of injecting an electrolyte into the battery case; a step of lowering a pressure of the battery case so that the electrolyte is impregnated into the electrode assembly; and a sealing step of sealing the battery case, wherein in the step of injecting the electrolyte, at least a portion of the electrolyte is accommodated in the pocket portion of the battery case.

At this time, in the step of lowering the pressure, the electrolyte accommodated in the pocket portion may be moved to the receiving space.

At this time, in the step of injecting the electrolyte, the electrolyte may be injected so that a portion of the electrode assembly is submerged by the electrolyte.

At this time, the secondary battery manufacturing method may further include an additional sealing step of further sealing a boundary between the receiving portion and the pocket portion; and a removal step of removing the pocket portion.

At this time, the pocket portion may include a main pocket portion having a main pocket space for accommodating the electrolyte; and a connecting portion providing a connecting space that allows the main pocket space and the receiving space to communicate with each other, wherein the connecting space may have a larger cross-sectional area than the main pocket space.

### ADVANTAGEOUS EFFECTS

According to one aspect of the present disclosure, the connecting space connecting the receiving space and the main pocket space is configured such that the cross-sectional area of the connecting space is larger than that of the main pocket space, and thus the electrolyte may easily flow between the receiving space and the main pocket space. Accordingly, the electrolyte accommodated in the main pocket space may be smoothly moved to the receiving space to impregnate the electrode assembly, so that the impregnation process may be performed with high quality.

The effects to be obtained by the present disclosure are not limited to the above-described effects, and other effects not mentioned herein may be clearly understood by those having ordinary skill in the art from this specification and the accompanying drawings.

### BRIEF DESCRIPTION OF THE DRAWINGS

FIG. 1 is a front view of a semi-assembly for a secondary battery according to the first embodiment of the present disclosure.
FIG. 2 is an enlarged view of part A of FIG. 1.
FIG. 3 is a side view of a semi-assembly for a secondary battery according to the first embodiment of the present disclosure.
FIG. 4 is an enlarged view of part B of FIG. 3.
FIG. 5 is a front view of a semi-assembly for a secondary battery according to the second embodiment of the present disclosure.
FIG. 6 is a front view of a semi-assembly for a secondary battery according to the third embodiment of the present disclosure.
FIG. 7 is a flow chart of a secondary battery manufacturing method according to an embodiment of the present disclosure.
FIG. 8 is a view for describing step S2 of FIG. 7.
FIG. 9 is a front view showing a rise in the water level of the impregnated liquid injected into the battery case in step S3 of FIG. 7.
FIG. 10 is a side view showing a rise in the water level of the impregnated liquid injected into the battery case in step S3 of FIG. 7.
FIG. 11 is a view showing a state in which the electrode assembly accommodated in the battery case is fully impregnated by step S3 of FIG. 7.
FIG. 12 is a view for describing steps S5 and S6 of FIG. 7.

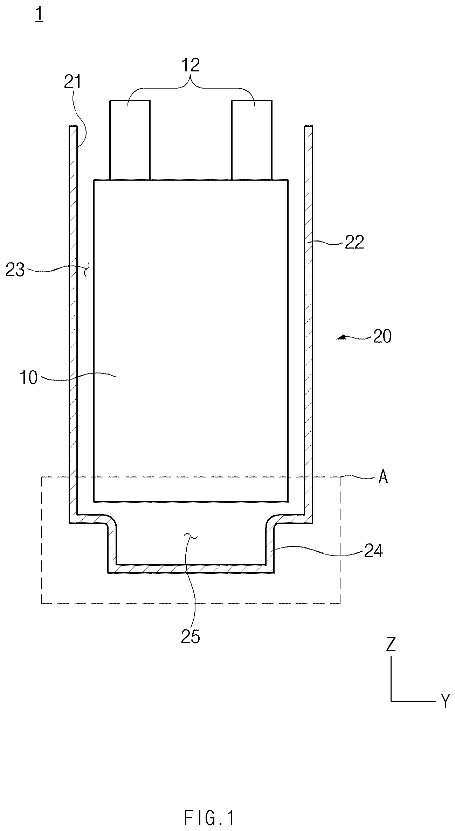

At this time, the battery case is shown in a cross-section in FIGS. 1 to 6 and FIGS. 8 to 12.

### DETAILED DESCRIPTION

Preferred embodiments of the present disclosure will be described in detail to enable those skilled in the art to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a semi-assembly for a secondary battery (hereinafter, referred to as a semi-assembly) according to the first embodiment of the present disclosure will be described.

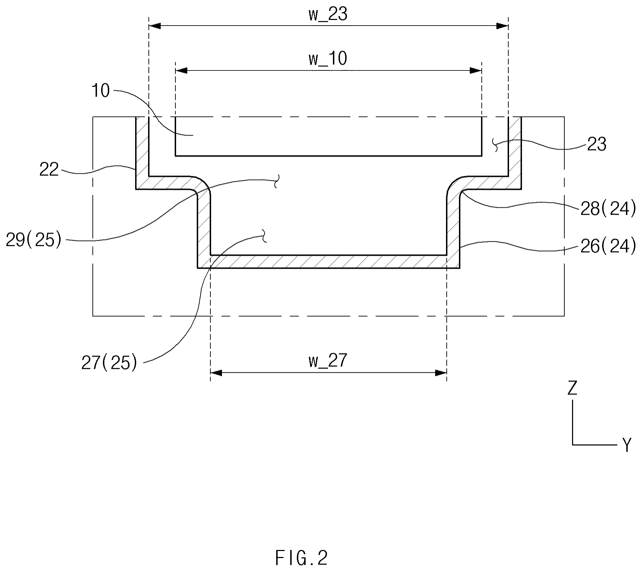

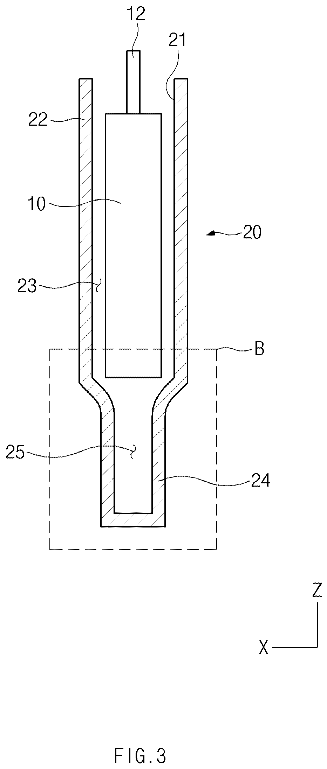

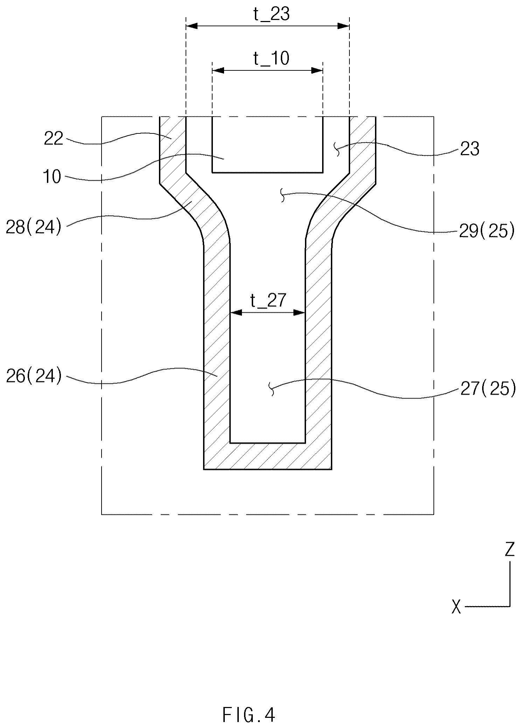

FIG. 1 is a front view of a semi-assembly for a secondary battery according to the first embodiment of the present disclosure. FIG. 2 is an enlarged view of part A of FIG. 1. FIG. 3 is a side view of a semi-assembly for a secondary battery according to the first embodiment of the present disclosure. FIG. 4 is an enlarged view of part B of FIG. 3.

Referring to FIGS. 1 to 4, a semi-assembly 1 according to the first embodiment of the present disclosure may be a semi-assembly for manufacturing a secondary battery. In this embodiment, the semi-assembly 1 may include an electrode assembly 10. The electrode assembly 10 may be an assembly having a charging and discharging function.

To this end, the electrode assembly 10 may have a structure in which a plurality of electrodes and separators are sequentially stacked. The electrode assembly 10 may be a stack type, a stack & folding type, or a cylindrical type, but the type or shape of the electrode assembly 10 is not particularly limited.

In this embodiment, the electrode assembly 10 may have a predetermined width w_10 in one direction. At this time, the one direction may be a direction parallel to the Y-axis based on FIG. 1. The electrode assembly 10 may have a predetermined thickness t_10 in another direction perpendicular to the one direction. At this time, the other direction may be a direction parallel to the X-axis based on FIG. 3.

Meanwhile, in this embodiment, an electrode lead 12 may be connected to the electrode assembly 10. The electrode lead 12 may be a lead for conducting electricity between the electrode assembly 10 and an external configuration. The electrode lead 12 may be formed of a film or busbar made of a conductive material, but the type or structure is not particularly limited.

In this embodiment, the electrode leads 12 may be configured as a pair. Any one of the pair of electrode leads 12 may be a negative electrode lead connected to the negative electrode of the electrode assembly 10, and the other may be a positive electrode lead connected to the positive electrode of the electrode assembly 10.

At this time, the electrode lead 12 may extend outward from the inside of the battery case 20 through the opening 21 of the battery case 20 to be described later. Accordingly, the electrode assembly 10 accommodated inside the battery case 20 may be electrically conducted to the outside via the electrode lead 12.

Referring to FIGS. 1 to 4 together, the semi-assembly 1 according to the first embodiment of the present disclosure may include a battery case 20. The battery case 20 may be a case for accommodating the electrode assembly 10 and the electrolyte described above. The battery case 20 may be a pouch-type battery case formed of a film-shaped pouch.

At this time, the electrode assembly 10 may be impregnated with the electrolyte accommodated together. The electrolyte may function to mediate the movement of ions included in the electrode of the electrode assembly 10. Therefore, in the manufacturing process of a secondary battery using the semi-assembly 1, it is important that the electrode assembly 10 is appropriately impregnated with the electrolyte.

Meanwhile, in this embodiment, the battery case 20 may include a receiving portion 22. The receiving portion 22 may be configured to provide a receiving space 23. The electrode assembly 10 may be disposed in the receiving space 23.

At this time, the receiving space 23 may have a larger width w_23 and a larger thickness t_23 than the electrode assembly 10 to accommodate the electrode assembly 10. Additionally, the receiving space 23 may have a longer length than the electrode assembly 10 in the vertical direction (Z-axis direction). The shapes of the receiving portion 22 and the receiving space 23 are not particularly limited as long as they can accommodate the electrode assembly 10.

Meanwhile, in this embodiment, the receiving portion 22 may be provided with an opening 21. The opening 21 may be a portion that is open outward. The receiving space 23 may communicate with the outside through the opening 21.

In the embodiment shown, the opening 21 may be provided in an upper portion (positive direction of the Z-axis) of the receiving portion 22. Through this opening 21, the electrolyte may be injected into the receiving space 23. The opening 21 may be sealed in a later process.

Referring to FIGS. 2 and 4, the battery case 20 of the semi-assembly 1 according to an embodiment of the present disclosure may include a pocket portion 24 extending from the receiving portion 22. The pocket portion 24 may be configured to accommodate an extra electrolyte.

To this end, the pocket portion 24 may be provided with a pocket space 25. During the impregnation process, the electrolyte accommodated in the pocket space 25 may be moved to the receiving space 23 to impregnate the electrode assembly 10.

In this embodiment, the pocket portion 24 may be connected to a lower portion (negative direction of the Z-axis) of the receiving portion 22. In other words, the pocket portion 24 may be positioned opposite to the opening 21 with the receiving portion 22 as the center. Accordingly, the electrolyte injected through the opening 21 flows downward by gravity and may fill the pocket space 25 of the battery case 20.

As such, in the semi-assembly 1 according to an embodiment of the present disclosure, there is more extra space (i.e., pocket space) inside the battery case 20 than in the conventional one, and thus, even if the same amount of electrolyte is injected as in the conventional one, the water level of the electrolyte may be positioned lower than in the conventional one. That is, a portion of the electrode assembly 10 may be submerged in the electrolyte, and the remaining portion may not be submerged.

This may prevent gas or the like that has not yet escaped from the center of the electrode assembly 10 from being captured. This may improve the quality of impregnation process. This will be described in detail together with the secondary battery manufacturing method according to an embodiment of the present disclosure.

Hereinafter, the pocket portion 24 of the battery case 20 according to the first embodiment of the present disclosure will be described in detail. Referring to FIGS. 2 and 4, in this embodiment, the pocket portion 24 may include a main pocket portion 26, and the pocket space 25 may include a main pocket space 27 provided inside the main pocket portion 26.

In this embodiment, an electrolyte may be mainly accommodated in the main pocket space 27. The main pocket portion 26 may be disposed at a predetermined distance from the receiving portion 22 in the vertical direction (Z-axis direction). The main pocket portion 26 may have a barrel shape that is open toward the receiving portion 22. The main pocket space 27 may communicate with the receiving space 23 via a connecting space 29 to be described later.

At this time, the main pocket space 27 may have a smaller width w_27 than the receiving space 23. The main pocket space 27 may have a smaller thickness t_27 than the receiving space 23. Alternatively, the main pocket space 27 may have a smaller width w_27 than the electrode assembly 10. The main pocket space 27 may have a smaller thickness t_27 than the electrode assembly 10. As a result, the electrode assembly 10 may be prevented from entering the main pocket space 25.

In this embodiment, the pocket portion 24 may include a connecting portion 28. The connecting portion 28 may be provided between the main pocket portion 26 and the receiving portion 22. The connecting portion 28 may provide a connecting space 29. The connecting space 29 may allow the main pocket space 27 and the receiving space 23 to communicate with each other. Accordingly, the electrolyte entering the receiving space 23 may flow into the main pocket space 27.

According to this embodiment, the connecting space 29 may have a larger cross-sectional area than the main pocket space 27. This may be to allow the electrolyte to flow smoothly through the receiving space 23 and the main pocket space 27. This may facilitate the impregnation process of the electrode assembly 10.

At this time, in this embodiment, the cross-sectional area may be an area of a cross-section perpendicular to the vertical direction (Z-axis direction) in which the main pocket space 27 and the receiving portion 22 are spaced apart. The cross-section may be a cross-section parallel to the X-axis and the Y-axis based on FIGS. 2 and 4.

At this time, in this embodiment, the cross-sectional area of the connecting portion 28 may become wider from the main pocket portion 26 toward the receiving portion 22. As shown, the connecting portion 28 may be rounded. And, the cross-sectional area of the connecting space 29 may become gradually wider toward the receiving portion 22.

As a result, the lower portion of the electrode assembly 10 may be supported by the connecting portion 28, while the flow between the main pocket space 27 and the receiving space 23 may be smoothly made.

Of course, the shape of the connecting portion 28 may be appropriately modified as necessary. For example, the connecting portion 28 may have a stepped shape (or, step shape). In this case, the cross-sectional area of the connecting space 29 may increase stepwise from the main pocket space 27 toward the receiving space 23.

As such, in the semi-assembly 1 according to an embodiment of the present disclosure, the electrolyte may flow smoothly between the pocket space 25 and the receiving space 23. As a result, the electrolyte impregnation process by the pocket portion 24 may be performed more effectively.

Hereinafter, a semi-assembly according to another embodiment of the present disclosure will be described. In describing the semi-assembly according to another embodiment of the present disclosure, differences from the semi-assembly according to the first embodiment of the present disclosure described above will be mainly described.

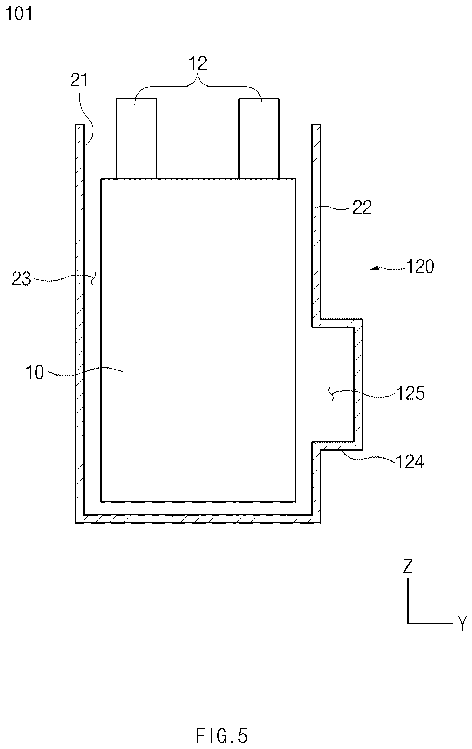

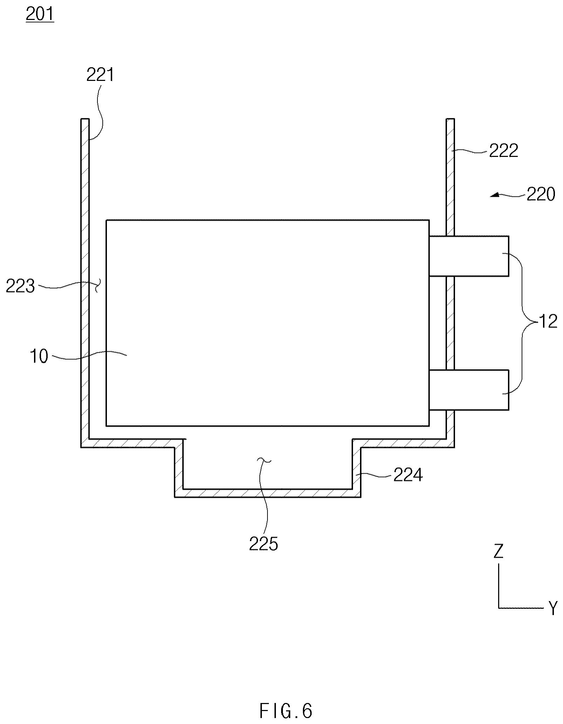

FIG. 5 is a front view of a semi-assembly for a secondary battery according to the second embodiment of the present disclosure. FIG. 6 is a front view of a semi-assembly for a secondary battery according to the third embodiment of the present disclosure.

FIG. 5 discloses a semi-assembly according to the second embodiment of the present disclosure. Referring to FIG. 5, a pocket portion 124 of a semi-assembly 101 according to this embodiment may be provided on a side portion of the electrode assembly 10 in the width direction (Y-axis direction).

In other words, the pocket portion 124 may be located between a bottom surface 22a of the receiving portion 22 and the opening 21. Here, the bottom surface 22a may be a surface of inner surfaces of the receiving portion 22 that is opposite to the opening 21.

FIG. 6 discloses a semi-assembly according to the third embodiment of the present disclosure. Referring to FIG. 6, an electrode lead 112 of a semi-assembly 201 according to this embodiment may be provided on one side of an electrode assembly 110 in the width direction (Y-axis direction). The electrode lead 112 may extend to the outside of the battery case 20 through one side of the receiving portion 22 in the width direction (Y-axis direction).

Meanwhile, in this embodiment, the length of the electrode assembly 10 in the width direction (Y-axis direction) is shown to be longer than the length thereof in the vertical direction (Z-axis direction). However, the relative size or ratio of the width direction length and the vertical direction length of the electrode assembly 10 is not particularly limited.

Hereinafter, a secondary battery manufacturing method (hereinafter, referred to as a manufacturing method) according to an embodiment of the present disclosure will be described.

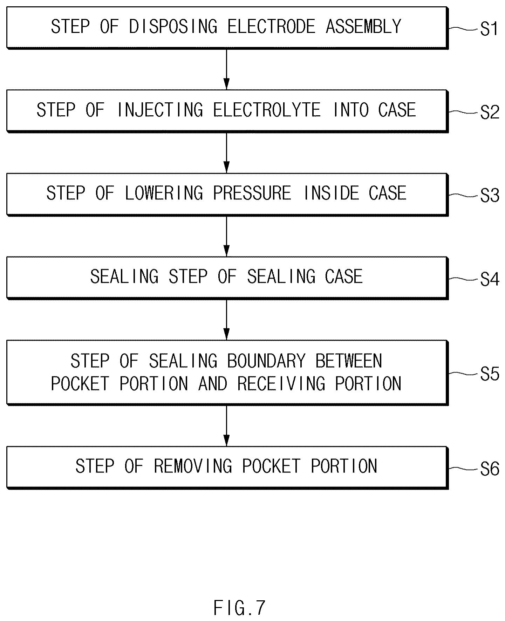

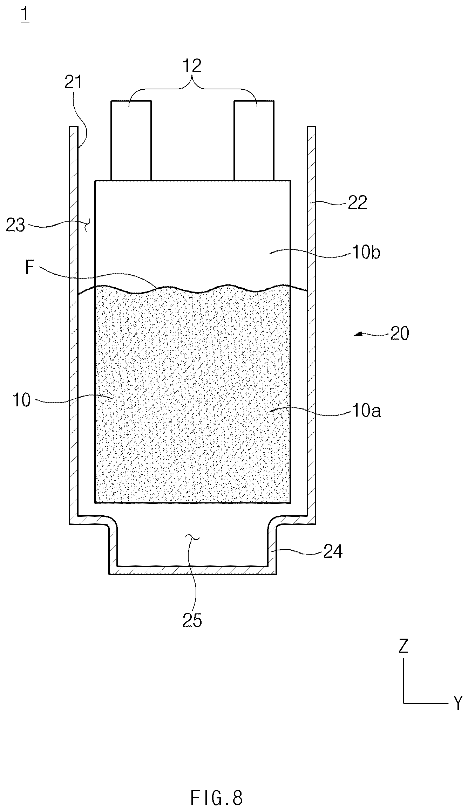

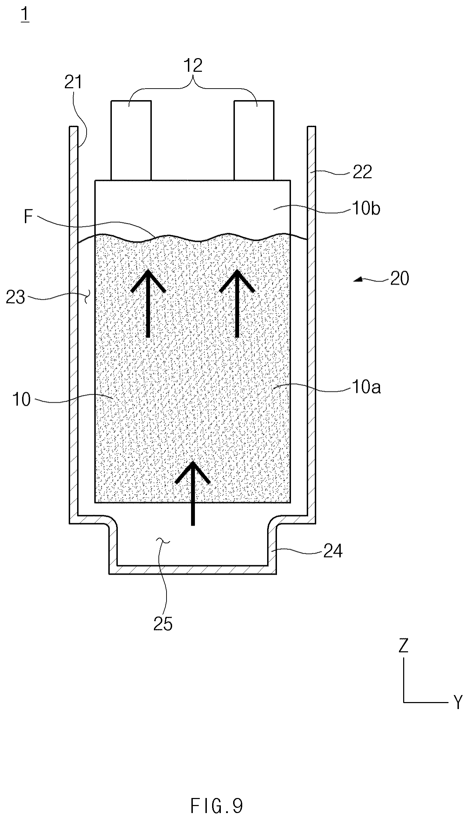

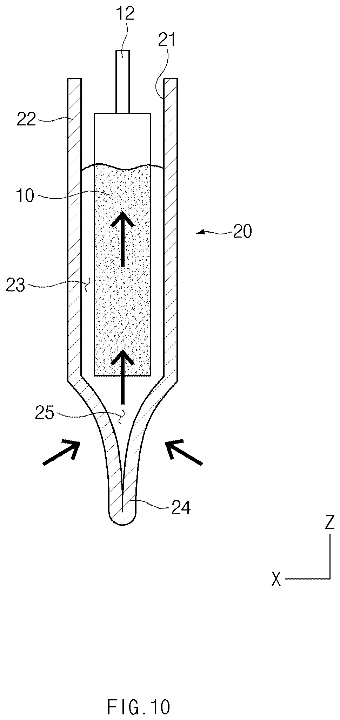

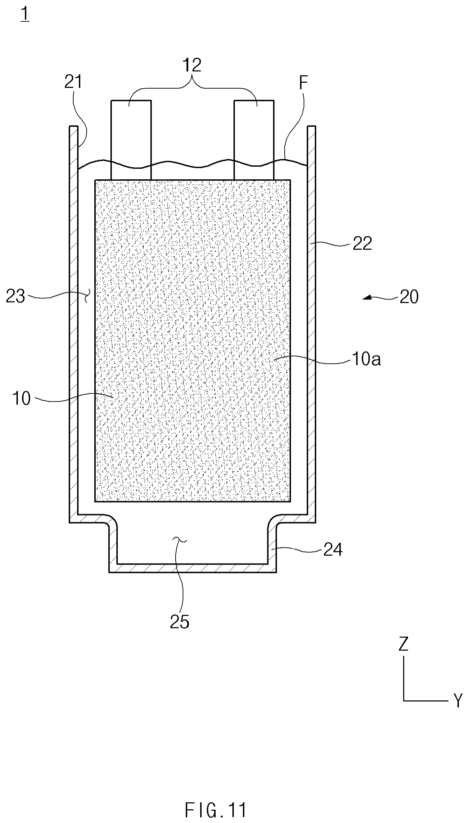

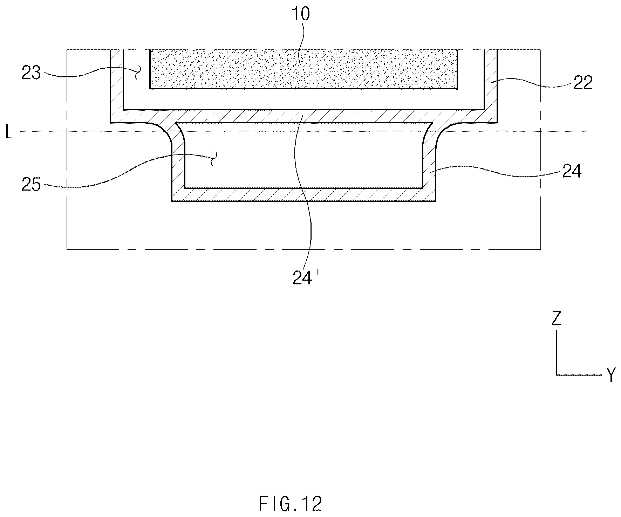

FIG. 7 is a flow chart of a secondary battery manufacturing method according to an embodiment of the present disclosure. FIG. 8 is a view for describing step S2 of FIG. 7. FIG. 9 is a front view showing a rise in the water level of the impregnated liquid injected into the battery case in step S3 of FIG. 7. FIG. 10 is a side view showing a rise in the water level of the impregnated liquid injected into the battery case in step S3 of FIG. 7. FIG. 11 is a view showing a state in which the electrode assembly accommodated in the battery case is fully impregnated by step S3 of FIG. 7. FIG. 12 is a view for describing steps S5 and S6 of FIG. 7.

A manufacturing method according to an embodiment of the present disclosure may be a method for manufacturing a secondary battery using a semi-assembly according to the embodiment of the present disclosure described above. Hereinafter, it will be described on the premise that a secondary battery is manufactured using the semi-assembly according to the first embodiment of the present disclosure.

Referring to FIGS. 7 to 12, a battery cell manufacturing method according to the present disclosure may include a placement step S1 of disposing an electrode assembly 10 in a battery case 20, an injection step S2 of injecting an electrolyte, a depressurization step S3 of impregnating the electrode assembly 10 with the electrolyte, and a sealing step S4 of sealing the battery case 20.

Referring to FIGS. 7 and 8, in the step S1 of disposing the electrode assembly 10 in the battery case 20, the electrode assembly 10 may be disposed in the receiving portion 22. The electrode lead connected to the electrode assembly 10 may be disposed to be exposed toward the opening 21.

Referring to FIGS. 7 to 11, in the injection step S2 of injecting the electrolyte, the electrolyte may be injected into the receiving portion 22 of the battery case 20 through the opening 21 formed in the battery case 20. At this time, in the injection step S2, a portion of the electrolyte may be accommodated in the pocket portion 24 of the battery case 20.

In the injection step S2, the electrolyte may be injected so that a portion of the electrode assembly 10 is submerged and the remaining portion thereof is not submerged. Since the electrolyte is also accommodated in the pocket portion 24, the electrode assembly 10 may not be fully submerged in the electrolyte. The water level of the electrolyte accommodated in the receiving portion 22 may be determined according to the size of the pocket portion 24, that is, the capacity of the electrolyte that can be accommodated in the pocket portion 24.

In the depressurization step S3 in which the electrolyte is impregnated into the electrode assembly 10, the pressure of the receiving portion 22 is lowered, so that the electrolyte may permeate into the electrode assembly 10. By gradually lowering the pressure of the receiving portion 22, the electrolyte may be impregnated into the electrode assembly 10 in a vacuum state.

In the depressurization step S3, the electrolyte accommodated in the pocket portion 24 may permeate into the electrode assembly 10. At this time, the pocket portion 24 may shrink, the volume of the pocket space 25 may decrease, and the electrolyte may be pushed into the receiving space 23. Therefore, the electrolyte in the pocket portion 24 may permeate into the electrode assembly 10, so that the pocket portion 24 may be emptied to some extent.

In the depressurization step S3 of the manufacturing method according to this embodiment, the electrolyte may permeate from the surface where the pocket portion 23 is formed toward the opening 21 of the battery case 20. In the injection step S2, a portion of the electrode assembly 10 is submerged.

The electrolyte is filled from the opposite part of the part where the opening 21 is formed due to gravity. Therefore, when the pressure of the receiving portion 22 is lowered, the electrolyte gradually permeates from the part where the pocket portion 24 is formed in the direction where the opening 21 is formed.

As a result, when the electrolyte is impregnated, the electrolyte does not permeate into the electrode assembly 10 from the outer part to the central part, but the impregnation may start from the part of the electrode assembly 10 submerged in the electrolyte.

And, as the water level of the electrolyte increases, the area of the part of the electrode assembly 10 submerged in the electrolyte becomes wider, and the electrolyte may gradually permeate into the electrode assembly 10.

In the process, the gas remaining inside the electrode assembly 10 may be pushed out by the electrolyte to the part that is not submerged and may escape. This may prevent gas or the like that has not yet escaped from the center of the electrode assembly 10 from being captured. This may improve the quality of the impregnation process.

Referring to FIGS. 7 and 12, the battery cell manufacturing method according to the present disclosure may further include an additional sealing step S5 and a removal step S6. In the additional sealing step S5, a boundary between the receiving portion 22 and the pocket portion 24 may be further sealed. Accordingly, a pocket sealing portion 24' may be formed.

When the electrolyte permeates into the electrode assembly 10, the pocket portion 24 is emptied to some extent, and thus the connection between the receiving portion 22 and the pocket portion 24 may be disconnected by sealing the boundary between the receiving portion 22 and the pocket portion 24.

In the removal step S6, the pocket portion 24 may be removed. Since the receiving portion 22 and the pocket portion 24 are sealed, both spaces may be independent spaces. The pocket portion 24 is no longer necessary after sealing, so it may be removed to secure additional space.

To this end, the pocket portion 24 may be removed by cutting the battery case 20 along the cutting line L. Therefore, the pocket portion 24 does not affect the overall size of the battery cell 1. The cutting line L may cross the pocket sealing portion 24' or may be located somewhat further outward than the pocket sealing portion 24'.

Meanwhile, the manufacturing method according to an embodiment of the present disclosure has been described as manufacturing a secondary battery using the semi-assembly according to the embodiment of the present disclosure described above. However, the manufacturing method according to an embodiment of the present disclosure may also be applied to a process of manufacturing a secondary battery using a semi-assembly of another structure or type including a battery case having a pocket portion capable of accommodating an electrolyte.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [LIST OF REFERENCE NUMERALS]

1, 101, 201: Semi-assembly for secondary battery
10, 110: Electrode assembly
12, 112: Electrode lead
20, 120: Battery case
22, 222: Receiving portion
23, 223: Receiving space
24, 124: Pocket portion
24': Pocket sealing portion
15, 125: Pocket space
F: Electrolyte
L: Cutting line

## Claims

1. A battery case for accommodating an electrode assembly and an electrolyte, comprising:
a receiving portion having a receiving space for accommodating the electrode assembly; and
a pocket portion connected to one side of the receiving portion,
wherein the pocket portion comprises:
a main pocket portion having a main pocket space for accommodating the electrolyte; and
a connecting portion providing a connecting space that allows the main pocket space and the receiving space to communicate with each other,
wherein the connecting space has a larger cross-sectional area than the main pocket space.

2. The battery case according to claim 1,
wherein a cross-sectional area of the connecting space increases from the main pocket space toward the receiving space.

3. The battery case according to claim 1,
wherein the connecting portion has a stepped shape or a rounded shape.

4. The battery case according to claim 1,
wherein the receiving space has a predetermined width in one direction, and
the width of the receiving space is larger than the width of the main pocket space.

5. The battery case according to claim 1,
wherein the receiving space has a predetermined width in one direction and a predetermined thickness in a direction perpendicular to the one direction, and
the thickness of the receiving space is larger than the thickness of the main pocket space.

6. The battery case according to claim 1,
wherein an opening that is open outward is provided on the other side of the receiving portion.

7. The battery case according to claim 6,
wherein an electrode lead extending outward through the opening is connected to the electrode assembly.

8. The battery case according to claim 6,
wherein the pocket portion is opposite to the opening.

9. The battery case according to claim 6,
wherein the receiving portion is provided with a bottom surface opposite to the opening, and
the pocket portion is located between the bottom surface and the opening.

10. The battery case according to claim 1,
wherein the receiving space and the main pocket space are disposed at a predetermined distance in one direction, and
the cross-sectional area is an area of a cross-section perpendicular to the one direction.

11. A semi-assembly for a secondary battery for manufacturing a secondary battery, comprising:
an electrode assembly; and
a battery case comprising a receiving portion having a receiving space for accommodating the electrode assembly and a pocket portion connected to one side of the receiving portion,
wherein the pocket portion comprises:
a main pocket portion having a main pocket space for accommodating an electrolyte; and
a connecting portion providing a connecting space that allows the main pocket space and the receiving space to communicate with each other,
wherein the connecting space has a larger cross-sectional area than the main pocket space.

12. The semi-assembly for a secondary battery according to claim 11,
wherein the electrode assembly is supported by the connecting portion.

13. The semi-assembly for a secondary battery according to claim 11,
wherein the electrode assembly has a predetermined width in one direction, and
the width of the main pocket space is smaller than the width of the electrode assembly.

14. The semi-assembly for a secondary battery according to claim 11,
wherein the electrode assembly has a predetermined width in one direction and a predetermined thickness in a direction perpendicular to the one direction, and
the thickness of the main pocket space is smaller than the thickness of the electrode assembly.

15. A secondary battery manufacturing method, comprising:
a step of disposing an electrode assembly in the receiving space of a battery case comprising a receiving portion having a receiving space and a pocket portion connected to one side of the receiving portion;
a step of injecting an electrolyte into the battery case;
a step of lowering a pressure of the battery case so that the electrolyte is impregnated into the electrode assembly; and
a sealing step of sealing the battery case,
wherein in the step of injecting the electrolyte, at least a portion of the electrolyte is accommodated in the pocket portion of the battery case.

16. The secondary battery manufacturing method according to claim 15,
wherein in the step of lowering the pressure, the electrolyte accommodated in the pocket portion is moved to the receiving space.

17. The secondary battery manufacturing method according to claim 15,
wherein in the step of injecting the electrolyte, the electrolyte is injected so that a portion of the electrode assembly is submerged by the electrolyte.

18. The secondary battery manufacturing method according to claim 15, further comprising:
an additional sealing step of further sealing a boundary between the receiving portion and the pocket portion; and
a removal step of removing the pocket portion.

19. The secondary battery manufacturing method according to claim 15,
wherein the pocket portion comprises:
a main pocket portion having a main pocket space for accommodating the electrolyte; and
a connecting portion providing a connecting space that allows the main pocket space and the receiving space to communicate with each other,
wherein the connecting space has a larger cross-sectional area than the main pocket space.
